# EUROPEAN PATENT SPECIFICATION

(11) **EP 3 981 300 B1**
(45) Date of publication and mention of the grant of the patent: **13.03.2024**
(21) Application number: 21200723.1
(22) Date of filing: 04.10.2021
(51) Int. Cl.: A47J 36/34, B23Q 3/08, B25B 11/00

(54) **A HOLDER AND METHOD FOR SECURING AN ITEM BY SUCTION**
HALTER UND VERFAHREN ZUM SICHERN EINES ARTIKELS DURCH ANSAUGEN
SUPPORT ET PROCÉDÉ DE SÉCURISATION D'UN ARTICLE PAR ASPIRATION

(30) Priority: 05.10.2020 DK PA202070673
(43) Date of publication of application: 13.04.2022
(73) Proprietor: Handigood ApS, 8464 Galten (DK)
(72) Inventor: JENSEN, John, 1260 Copenhagen K (DK)
(74) Representative: Nordic Patent Service A/S

(56) References cited:
- US-A1- 2008 265 108
- US-A1- 2013 270 757

## Description

### TECHNICAL FIELD

The disclosure relates to a holder and method for securing an item, such as a foodstuff receptacle, and more particularly to a holder and method for securing a foodstuff receptacle on a top, such as a kitchen top, a tabletop, or a countertop.

### BACKGROUND

A holder for securing a foodstuff receptacle by means of suction created by a suction pump driven by an electric drive motor is known. This known holder creates a partial vacuum between the top of the holder and the bottom of the foodstuff receptacle to secure the foodstuff receptacle to the holder by suction. The holder itself is secured to the countertop or the like by several suction cups permanently attached to the bottom face of the holder, with the suction cups creating a releasable connection to the countertop. This known holder is aimed at facilitating the life of e.g. people that can only use one hand and thus cannot simultaneously hold the foodstuff receptacle and open or close the foodstuff receptacle with the other hand. The known holder represented a significant improvement. However, it can be difficult to remove the holder from the countertop when it is secured to the countertop by the suction cups, in particular since the suction cups need to provide a relatively strong attachment to the countertop to prevent the holder from moving or tilting when the user is manipulating an item secured to the holder.

US20130270757A1 discloses a holder according to the preamble of claim 1, that is specifically designed for holding workpieces and uses an O-ring to seal between the upper surface of the holder and the workpiece tool and another O-ring to seal between the bottom surface of the holder and the worktop.

### SUMMARY

It is an object to provide a holder that overcomes or at least reduces the problem mentioned above.

The foregoing and other objects are achieved by the features of the independent claims. Further implementation forms are apparent from the dependent claims, the description, and the figures.

According to a first aspect, there is provided a holder for securing an item according to claim 1.

By providing the holder with a suction port on the bottom face, that creates a partial vacuum between the table-, counter- or desktop by suction for securing the holder thereto, the holder can be removed from the table-, counter- or desktop without needed to apply force since the partial vacuum will be removed when the action of the vacuum pump is ended. Further, the holder is better secured against inadvertent movement or tilting with the complete bottom face forming one large suction pad, which provides a stronger adherence force and a more rigid connection to the countertop or the like compared to suction cups.

According to the invention, the top gasket surrounding the top suction port on the top face forms a top suction pad, and the bottom gasket surrounding the top suction port on the bottom face forms a bottom suction pad.

In a possible implementation form of the first aspect, the at least one vacuum pump is driven by an electric drive motor that is powered by a rechargeable battery, and wherein a lid for accessing the rechargeable battery is provided in the bottom face and wherein the bottom gasket is provided with an aperture surrounding the lid.

In a possible implementation form of the first aspect, a suction side of the at least one vacuum pump is connected to the top suction port and to the bottom suction port via respective branches of a main suction line.

In a possible implementation form of the first aspect, the top face is parallel with the bottom face.

In a possible implementation form of the first aspect, the top face opposes the bottom face.

In a possible implementation form of the first aspect, the top face and/or the bottom face have a substantially flat outer surface.

In a possible implementation form of the first aspect, the top gasket and/or the bottom gasket have a substantially flat outer surface.

According to a second aspect there is provided a method according to claim 7.

In a possible implementation form of the second aspect, the method comprises activating the pump through a manual switch for securing the item to the holder and for securing the holder to the table-, counter- or desktop.

In a possible implementation form of the second aspect, the item is a receptacle for receiving foodstuffs, such as a pan, frying pan, saucepan, a pot, a casserole, a tin can, a jar, a glass, a bottle, a jug, a carton, a wok, a cup, a mug, a chopping board, a sheet pan, a griddle, a baking stone, or a bowl.

In a possible implementation form of the second aspect, the method comprises ending the partial vacuum by deactivation of the vacuum pump and/or by switching a valve and thereby connecting the top suction port and the bottom suction port to atmosphere.

These and other aspects will be apparent from the embodiments described below.

### BRIEF DESCRIPTION OF THE DRAWINGS

In the following detailed portion of the present disclosure, the aspects, embodiments, and implementations will be explained in more detail with reference to the example embodiments shown in the drawings, in which:
Fig. 1 is an elevated view of a holder according to an embodiment,
Fig. 2 is a side view of the holder of the embodiment of Fig. 1 placed on a countertop or the like and with a food receptacle in the form of a saucepan placed on the holder,
Fig. 3 is a side view of the holder of the embodiment of Fig. 1,
Fig. 4 is a top view of the holder of the embodiment of Fig. 1,
Fig. 5 is a bottom view of the holder of the embodiment of Fig. 1,
Fig. 6 is a diagrammatic representation of the holder of the embodiment of Fig. 1, showing the pneumatic and electric system of the holder, and
Fig. 7 is a diagrammatic illustration of a holder according to another embodiment.

### DETAILED DESCRIPTION

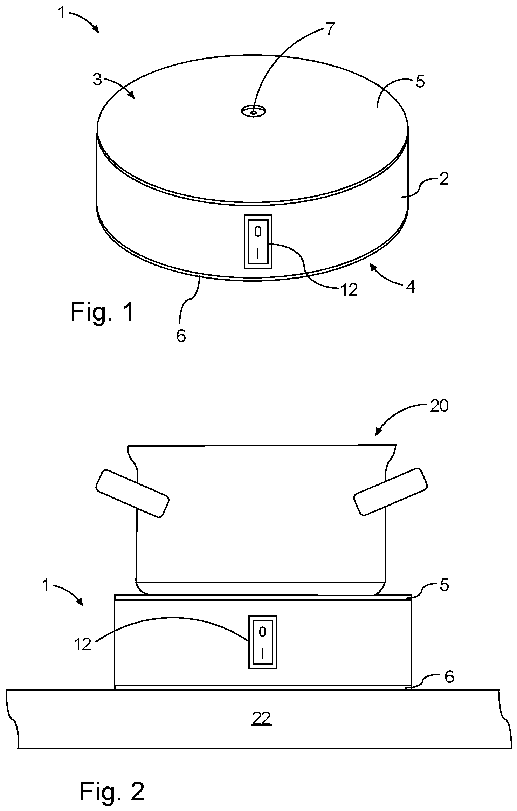

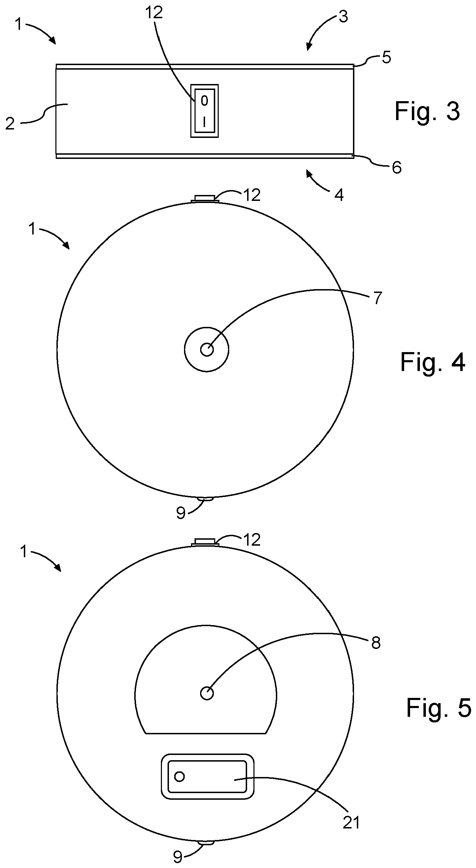

Figs. 1 to 6 disclose an embodiment of the holder 1 for securing an item 20, such as a foodstuff receptacle. The foodstuff receptacle can be a household item, such as a pan (e.g. frying pan or saucepan), a pot, a casserole, a tin can, a jar, a glass, a bottle, a jug, a carton, a wok, a cup, a mug, a chopping board, a sheet pan, a griddle, a baking stone or a bowl. The holder 1 serves to secure the item 20 relative to a support surface, such as for example a countertop, a desktop, or a tabletop 22, so that the item 20 can be exposed to force without moving or tilting, for example for opening or closing the item 20 using one hand only.

The holder 1 comprises a housing 2, which is shown as a disc-shaped housing in the embodiment. The housing 2 has a substantially flat top face 3 and a substantially flat bottom face 4, that extend parallel and face away from one another. However, the peripheral surface of the housing 2 that connects the top face 3 to the bottom face 4 can have any desirable outline, such as a (rounded) polygon outline, an elliptical or other rounded outline, and it is understood that the outline does not need to be circular as shown in the figures.

A top suction port 7 is arranged in the top face 3. The top face 3 is configured to have the item 20 placed thereon.

A bottom suction port 8 is arranged in the bottom face 4. The bottom face 4 is configured to be placed on a flat supportive surface, such as a desktop, tabletop, or countertop 22.

A top gasket 5 surrounds the top suction port 7. The bottom face 4 is provided with a bottom gasket 6 surrounding the bottom suction port 8.

In an embodiment, the top gasket 5 and/or bottom gasket 6 are made of natural and/or synthetic rubber or another suitable polymer or mixture thereof. In an embodiment, the top gasket 5 and/or bottom gasket 6 are made from a foam rubber material (natural and/or synthetic rubber or another suitable polymer).

The top gasket 5 surrounding the top suction port 7 on the top face 3 forms a top suction pad, and the bottom gasket 6 surrounding the top suction port 8 on the bottom face 4 forms a bottom suction pad.

The holder 1 is provided with at least one vacuum pump 14. In the embodiment, the vacuum pump 14 is driven by a DC electric drive motor 13. In the shown embodiment the electric drive motor 13 is powered by a (rechargeable) battery 11, and a lid 21 for accessing the (rechargeable) battery 11 is provided in the bottom face 4. The bottom gasket 6 is provided with an aperture surrounding the lid 21, for providing access to the lid 21. In another embodiment (not shown) the electric drive motor 13 is powered by an external electric DC source, that can be plugged in through a socket 9. If the battery 11 is a rechargeable battery, the battery 11 can be recharged with an external electric DC source through the socket 9. A switch 12, preferably a toggle switch, allows a user to activate and deactivate the electric drive motor 13, i.e. to activate and deactivate the vacuum pump 14.

The vacuum pump 14 is connected to the top suction port 7 for creating a partial vacuum between the top face 3 and the bottom side of the item 20 for securing the item 20 to the holder 1 by suction. The vacuum pump 14 is also connected to the bottom suction port 8 for creating a partial vacuum between the bottom face 4 and the table-, counter- or desktop 22 for securing the holder 1 to the table-, counter- or desktop 22 by suction. Thus, when a partial vacuum is created by the vacuum pump 14, the partial vacuum is created between the item 20 and the holder 1 and between the countertop 22 and the holder 1, thus securing the item 20 relatively to the countertop 22 to prevent movement or tilting of the item 20 relative to the countertop 22 thereby allowing a person to work with the item 20 without needing to hold the item 20 to prevent the item 20 from moving or tilting.

The suction side of the vacuum pump 14 is connected to the top suction port 7 via a main suction line 15 and a top branch suction line 16. The suction side of the at least one vacuum pump 14 is connected to the bottom suction port 8 via a main suction line 15 and a bottom branch suction line 17.

In the embodiment, a bleed line 18 connects the main suction line 15 to atmosphere via a bleed valve 19. The bleed valve 19 is preferably is a 2-way valve with an open and a closed position. The bleed valve 19 is electronically controlled and biased (preferably resiliently biased) towards its open position, i.e. without electric power being applied to the bleed valve 19 it will move to its open position and connect the main suction line 15 to atmosphere, thereby removing any partial vacuum in the main suction line 15.

A controller 10 is operably connected to the switch 12, to the electric drive motor 13, to the bleed valve 19, to the (rechargeable) battery 11, and to the charging/DC power socket 9. The controller 10 is configured to activate and deactivate the electric drive motor 13 in response to a signal from the switch 12. Simultaneously, the controller 10 is configured to power the bleed valve 19 when the electric drive motor 13 is activated and the controller 10 is configured to end electric power to the bleed valve 19 when the electric drive motor 13 is deactivated. Thus, the controller 10 is configured to move the bleed valve 19 to its closed position upon powering up the electric drive motor 13 and is configured to move the bleed valve 19 to its open position when the electric drive motor 13 is deactivated. By powering the bleed valve 19 when the signal from the switch 12 indicates that the vacuum pump 14 should be activated, it is ensured that a partial vacuum can build up in the main suction line 15 since the bleed line 18 will no longer be connected to atmosphere since the bleed valve 19 is moved to its closed position. Further, by ending power to the bleed valve 19 when the signal from the switch 12 indicates that the vacuum pump 14 should be deactivated, it is ensured that a partial vacuum in the main vacuum line 15 is punctured, i.e. atmospheric pressure is established in the main vacuum line 15 and the top- and bottom branch lines 16, 17 connected thereto. Thus, the partial vacuum that secures the item 22 to the holder 1 is instantaneously removed when the bleed valve 19 moves to its open position and the user can move the item 20 away from the holder 1. The same applies to the partial vacuum that secures the holder 1 to the countertop 22 so that the user can move the holder 1 away from the countertop 22. In an embodiment without the bleed valve 19, atmospheric pressure will be restored in the main vacuum line 15 due to leakage through e.g. the vacuum pump 14, but this process will take time and the user will have to wait before being able to take the item 20 off the holder 1 and be able to take the holder 1 off the countertop 22.

The pneumatic and electric components of the holder 1 are preferably arranged inside the housing 2 and is ensured that the interior of the housing 2 has a connection to the atmosphere to ensure that the bleed valve 19 and the outlet port of the vacuum pump 14 have access to atmospheric pressure.

### Operation

The user places the holder 1 on the countertop 22 or the like and places the item 20 on the holder 1. The countertop 22 should preferably be flat and somewhat smooth so that the bottom gasket 6 can hermetically seal onto the surface of the countertop 22. Likewise, the bottom of the item 20 should be suitable for creating a hermetic seal with the top gasket 5.

Next, the user operates the switch 12 (moves the switch 12 to its "on" position), whereupon the controller 10 activates the electric drive motor 13 and thus the vacuum pump 14 and simultaneously, the controller 10 powers the bleed valve 19, thereby moving the bleed valve 19 to its closed position. The action of the vacuum pump 14 creates a partial vacuum in the main suction line 15 and the top and bottom branch suction lines 16, 17 which through the respective top and bottom suction ports 7, 8 create partial vacuums between the bottom face 4 and the countertop 22 and between top face 3 and the item 20, thereby securing by suction the holder 1 to the countertop 22 and securing by suction the item 20 to the holder 1.

When the item 20 is to be removed from the holder 1 and/or the holder 1 needs to be removed from the countertop 22, the user operates the switch 12 (moves the switch 12 to its "off position). In response to the signal from the switch 12, the controller 10 ends power to the bleed valve 19 and simultaneously the deactivates the electric drive motor 13, thereby deactivating the vacuum pump 14. The bleed valve 19 creates a fluidic connection between the main suction line 15 and the atmosphere, thereby rapidly removing the partial vacuum that secures the item 22 the holder 1 and secures the holder 1 to the countertop 22. Consequently, the item 20 can be removed from the holder 1, and the holder 1 can be removed from the countertop 22 substantially immediately after moving the switch 12 to its off position.

In an embodiment (not shown) the holder is provided with a top vacuum pump connected to the top vacuum port and provided with a bottom vacuum pump connected to the bottom vacuum port. In a variation of this embodiment, there is a manual switch for operating the top vacuum pump and another manual switch for operating the bottom vacuum pump. This embodiment allows the holder 1 to remain secured to the countertop 22 whilst the item 20 is removed from the holder 1 and e.g. for subsequently placing and securing another item 20 or the same item 20 on the holder 1. In this embodiment, there will be provided a top bleed valve for removing the partial vacuum between the top face 3 and the item 20 and a bottom bleed valve for removing the partial vacuum between the bottom face 4 and the countertop 22.

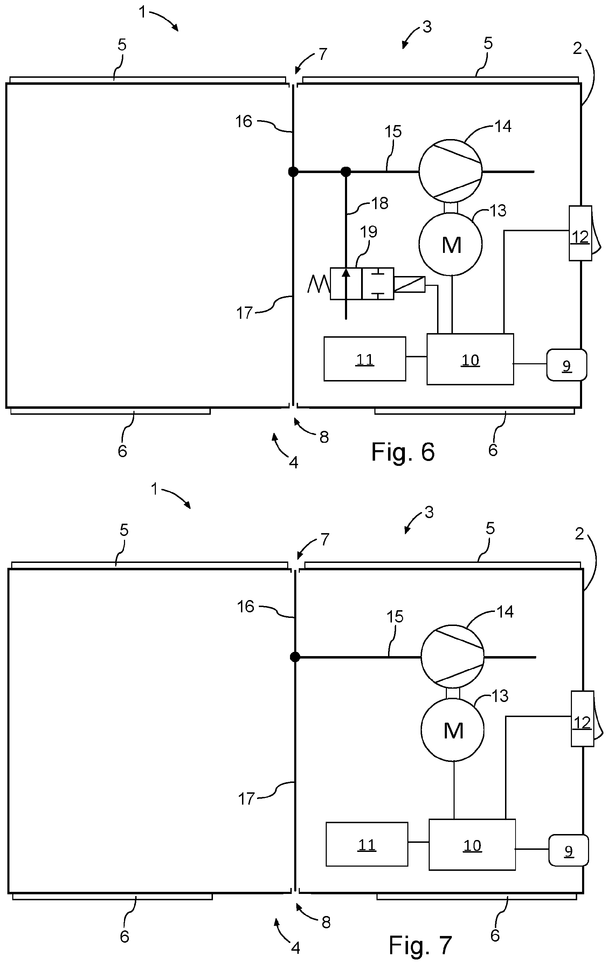

Fig. 7 shows another embodiment. In this embodiment, structures and features that are the same or similar to corresponding structures and features previously described or shown herein are denoted by the same reference numeral as previously used for simplicity. The embodiment of Fig. 7 is essentially identical to the embodiments described above, except that the embodiment of Fig. 7 does not have a bleed valve. Instead, both the drive motor 13 and the vacuum pump 14 are of the reversible type, so the vacuum pump 14 acts as regular pump, i.e. the vacuum pump 14 pumps air into the port that is connected to the vacuum line 15 when it is reversed. The controller 10 is configured to start the drive motor 13 and the vacuum pump 14 in the direction for creating a partial vacuum in the vacuum line 15 when the controller 10 receives an activation signal from the switch 12. The controller is also configured to reverse the direction of the drive motor 13 and the vacuum pump 14 for removing the partial vacuum in the vacuum line 15 when the controller 10 receives a deactivation signal from the switch 12.

By reversing the vacuum pump for a limited time in response to a deactivation signal, the vacuum pump acts for the limited period of time like a regular pump, thereby pumping air to the vacuum port and thus rapidly removing the vacuum that secured the item to the holder and hence allowing the user to remove the item from the holder practically instantaneously. The various aspects and implementations have been described in conjunction with various embodiments herein. However, other variations to the disclosed embodiments can be understood and effected by those skilled within the scope of the appended claims. In the claims, the word "comprising" does not exclude other elements or steps, and the indefinite article "a" or "an" does not exclude a plurality. A single processor, controller, or other unit may fulfill the functions of several items recited in the claims. The mere fact that certain measures are recited in mutually different dependent claims does not indicate that a combination of these measured cannot be used to advantage. The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "top", "bottom", "up" and "down", as well as adjectival and adverbial derivatives thereof (e.g., "horizontally", "rightwardly", "upwardly", etc.), simply refer to the orientation of the illustrated structure as the particular drawing figure faces the reader or relative to the gravitational field of the Earth.

## Claims

1. A holder (1) for securing an item (20), such as a receptacle (20) for receiving foodstuff, the holder (1) comprising:
- a housing (2),
- the housing (2) having a top face (3) configured for supporting a bottom side of the item (20) and a bottom face (4) configured for being placed on a table-, counter- or desktop (22),
- a top suction port (7) arranged in the top face (3),
- a bottom suction port (8) arranged in the bottom face (4),
- at least one vacuum pump (14),
- the at least one vacuum pump (14) being connected to the top suction port (7) for creating at least a partial vacuum between the top face (3) and the bottom side of the item (20) for securing the item (20) to the holder (1) by suction, and
- the at least one vacuum pump (14) being connected to the bottom suction port (8) for creating at least a partial vacuum between the bottom face (4) and the table-, counter- or desktop (22) for securing the holder (1) to the table-, counter- or desktop (22) by suction,
the top face (3) being provided with a top gasket (5) surrounding the top suction port (7) and the bottom face (4) being provided with a bottom gasket (6) surrounding the bottom suction port (8),
**characterized by** the top gasket (5) surrounding the top suction port (7) on the top face (3) forming a top suction pad, and the bottom gasket (6) surrounding the bottom suction port (8) on the bottom face (4) formimg a bottom suction pad.

2. The holder (1) according to claim 1, wherein the at least one vacuum pump (14) is driven by an electric drive motor (13) that is powered by a rechargeable battery (11).

3. The holder (1) according to claim 2, comprising a lid (21) for accessing the rechargeable battery (11), the lid preferably being provided in the bottom face (4) and wherein the bottom gasket (6) preferably being provided with an aperture surrounding the lid (21).

4. The holder (1) according to any one of claims 1 to 3, wherein a suction side of the at least one vacuum pump (14) is connected to the top suction port (7) and to the bottom suction port (8) via respective branches (16,17) of a main suction line (15).

5. The holder (1) according to any one of claims 1 to 4, wherein the top face (3) is parallel with the bottom face (4), and wherein the top face (3) preferably opposes the bottom face (4).

6. The holder (1) according to any one of claims 1 to 5, comprising a manual switch (12) for controlling the activation and deactivation of the vacuum pump (14).

7. A method for securing a receptacle (20) for receiving foodstuff, the method comprising:
providing a holder (1) having a housing (2), the housing (2) having a substantially flat top face (3) configured for supporting a bottom side of the item (20), the housing (2) having a substantially flat bottom face (4) configured for being placed on a table-, counter- or desktop (22), the holder (1) comprising at least one vacuum pump (14), the top face (3) being provided with a top gasket (5) surrounding a top suction port (7) and the bottom face (4) being provided with a bottom gasket (6) surrounding a bottom suction port (8), and the top gasket (5) surrounding the top suction port (7) on the top face (3) forming a top suction pad, and the bottom gasket (6) surrounding the top suction port (8) on the bottom face (4) formimg a bottom suction pad,
- creating by action of the vacuum pump (14) at least a partial vacuum between the top face (3) and the bottom side of the item (20) thereby securing the item (20) to the holder (1) by suction, and
- creating by action of the vacuum pump (14) at least a partial vacuum between the bottom face (4) and the table-, counter- or desktop (22) thereby securing the holder (1) to the table-, counter- or desktop (22) by suction.

8. The method according to claim 7, comprising activating the vacuum pump (14) through a manual switch (12) for securing the item (20) to the holder (1) and for securing the holder (1) to the table-, counter- or desktop (22).

9. The method according to claim 7 or 8, wherein the receptacle (20) for receiving foodstuff is a pan, a frying pan, a saucepan, a pot, a casserole, a tin can, a jar, a glass, a bottle, a jug, a carton, a wok, a cup, a mug, a chopping board, a sheet pan, a griddle, a baking stone or a bowl.

10. The method according to any one of claims 7 to 9, comprising ending the partial vacuum by deactivation of the vacuum pump (14) and/or by switching a bleed valve (19) and thereby connecting the top suction port (7) and the bottom suction port (9) to atmosphere.

## Patentansprüche

1. Halter (1) zum Sichern eines Artikels (20) wie etwa eines Behälters (20) zur Aufnahme von Lebensmitteln, wobei der Halter (1) umfasst:
- ein Gehäuse (2),
- wobei das Gehäuse (2), das eine obere Seite (3) aufweist, konfiguriert ist, um eine untere Seite des Artikels (20) zu tragen, und wobei eine untere Seite (4) konfiguriert ist, um auf einer Tischplatte, einem Tresen oder einer Arbeitsfläche (22) angeordnet zu werden,
- einen oberen Sauganschluss (7), der auf der oberen Seite (3) angeordnet ist,
- einen unteren Sauganschluss (8), der auf der unteren Seite (4) angeordnet ist,
- mindestens eine Vakuumpumpe (14),
- wobei die mindestens eine Vakuumpumpe (14) mit dem oberen Sauganschluss (7) verbunden ist, um mindestens ein partielles Vakuum zwischen der oberen Seite (3) und der unteren Seite des Artikels (20) zu erzeugen, um den Artikel (20) an dem Halter (1) durch Ansaugen zu sichern bzw. zu befestigen, und
- wobei die mindestens eine Vakuumpumpe (14) mit dem unteren Sauganschluss (8) verbunden ist, um mindestens ein partielles Vakuum zwischen der unteren Seite (4) und der Tischplatte, dem Tresen oder der Arbeitsfläche (22) zu erzeugen, um den Halter (1) an der Tischplatte, dem Tresen oder der Arbeitsfläche (22) durch Ansaugen zu sichern,
wobei die obere Seite (3) mit einer oberen Dichtung (5) versehen ist, die den oberen Sauganschluss (7) umgibt, und wobei die untere Seite (4) mit einer unteren Dichtung (6) versehen ist, die den unteren Sauganschluss (8) umgibt,
**dadurch gekennzeichnet, dass** die obere Dichtung (5), die den oberen Sauganschluss (7) auf der oberen Seite (3) umgibt, einen oberen Saugpfad bildet, und dass die untere Dichtung (6), die den unteren Sauganschluss (8) auf der unteren Seite (4) umgibt, einen unteren Saugpfad bildet.

2. Halter (1) nach Anspruch 1, wobei die mindestens eine Vakuumpumpe (14) durch einen elektrisch angetriebenen Motor (13), der von einer wiederaufladbaren Batterie (11) seine Energie bezieht, angetrieben wird.

3. Halter (1) nach Anspruch 2, der eine Klappe (21) umfasst, um auf die wiederaufladbare Batterie (11) zugreifen zu können, wobei die Klappe vorzugsweise auf der unteren Seite (4) bereitgestellt ist, und wobei die untere Dichtung (6) vorzugsweise mit einer Öffnung, die die Klappe (21) umgibt, bereitgestellt ist.

4. Halter (1) nach einem der Ansprüche 1 bis 3, wobei eine Saugseite der mindestens einen Vakuumpumpe (14) mit dem oberen Sauganschluss (7) und mit dem unteren Sauganschluss (8) über die jeweiligen Zweige (16, 17) einer Hauptsaugleitung (15) verbunden ist.

5. Halter (1) nach einem der Ansprüche 1 bis 4, wobei die obere Seite (3) parallel zu der unteren Seite (4) ist, und wobei die obere Seite (3) vorzugsweise gegenüber der unteren Seite (4) liegt.

6. Halter (1) nach einem der Ansprüche 1 bis 5, der einen manuellen Schalter (12) umfasst, um die Aktivierung und Deaktivierung der Vakuumpumpe (14) zu steuern.

7. Verfahren zum Sichern eines Behälters (20) zur Aufnahme von Lebensmitteln, wobei das Verfahren umfasst:
Bereitstellen eines Halters (1) mit einem Gehäuse (2), wobei das Gehäuse (2) eine im Wesentlichen flache obere Seite (3) aufweist, die konfiguriert ist, um eine untere Seite des Artikels (20) zu tragen, und wobei das Gehäuse (2) eine im Wesentlichen flache untere Seite (4) aufweist, die konfiguriert ist, um auf einer Tischplatte, einem Tresen oder einer Arbeitsfläche (22) angeordnet zu werden, wobei der Halter (1) mindestens eine Vakuumpumpe (14) umfasst, wobei die obere Seite (3) mit einer oberen Dichtung (5) versehen ist, die einen oberen Sauganschluss (7) umgibt, und wobei die untere Seite (4) mit einer unteren Dichtung (6) versehen ist, die den unteren Sauganschluss (8) umgibt,
und wobei die obere Dichtung (5), die den oberen Sauganschluss (7) auf der oberen Seite (3) umgibt, einen oberen Saugpfad bildet, und wobei die untere Dichtung (6), die den oberen Sauganschluss (8) auf der unteren Seite (4) umgibt, einen unteren Saugpfad bildet,
- Erzeugen durch eine Betätigung der Vakuumpumpe (14) mindestens eines partiellen Vakuums zwischen der oberen Seite (3) und der unteren Seite des Artikels (20), wodurch der Artikel (20) an dem Halter (1) durch Ansaugen gesichert wird, und
- Erzeugen durch eine Betätigung der Vakuumpumpe (14) mindestens eines partiellen Vakuums zwischen der unteren Seite (4) und der Tischplatte, dem Tresen oder der Arbeitsfläche (22), wodurch der Halter (1) an der Tischplatte, dem Tresen oder der Arbeitsfläche (22) durch Ansaugen gesichert wird.

8. Verfahren nach Anspruch 7, das eine Aktivierung der Vakuumpumpe (14) durch einen manuellen Schalter (12) umfasst, um den Artikel (20) an dem Halter (1) zu sichern, und um den Halter (1) an der Tischplatte, an dem Tresen oder an der Arbeitsfläche (22) zu sichern.

9. Verfahren nach Anspruch 7 oder 8, wobei der Behälter (20) zur Aufnahme von Lebensmitteln eine Pfanne, eine Bratpfanne, eine Soßenpfanne, ein Topf, ein Schmortopf, eine Blechbüchse, eine Kanne, ein Glas, eine Flasche, ein Krug, ein Karton, ein Wok, eine Tasse, ein Becher, ein Schneidebrett, ein Backblech, eine Grillplatte, ein Backstein oder eine Schüssel ist.

10. Verfahren nach einem der Ansprüche 7 bis 9, die das Beendendes des partiellen Vakuums durch eine Deaktivierung der Vakuumpumpe (14) und/oder durch ein Schalten eines Ablassventils (19) und dadurch ein Verbinden des oberen Sauganschlusses (7) und des unteren Sauganschlusses (9) mit der Atmosphäre umfasst.

## Revendications

1. Support (1) pour la fixation d'un article (20), tel qu'un réceptacle (20) destiné à recevoir un produit alimentaire, le support (1) comprenant :
- un logement (2),
- le logement (2) comportant une face supérieure (3) configurée pour supporter un côté inférieur de l'article (20) et une face inférieure (4) configurée pour être placée sur un dessus de table, comptoir ou bureau (22),
- un orifice d'aspiration supérieur (7) disposé dans la face supérieure (3),
- un orifice d'aspiration inférieur (8) disposé dans la face inférieure (4),
- au moins une pompe à vide (14),
- l'au moins une pompe à vide (14) étant raccordée à l'orifice d'aspiration supérieur (7) pour créer au moins un vide partiel entre la face supérieure (3) et le côté inférieur de l'article (20) de manière à fixer l'article (20) au support (1) par aspiration, et
- l'au moins une pompe à vide (14) étant raccordée à l'orifice d'aspiration inférieur (8) pour créer au moins un vide partiel entre la face inférieure (4) et le dessus de table, comptoir ou bureau (22) de manière à fixer le support (1) au dessus de table, comptoir ou bureau (22) par aspiration,
la face supérieure (3) étant pourvue d'un joint d'étanchéité supérieur (5) entourant l'orifice d'aspiration supérieur (7) et la face inférieure (4) étant pourvue d'un joint d'étanchéité inférieur (6) entourant l'orifice d'aspiration inférieur (8),
**caractérisé en ce que** le joint d'étanchéité supérieur (5) entourant l'orifice d'aspiration supérieur (7) sur la face supérieure (3) forme une ventouse supérieure, et le joint d'étanchéité inférieur (6) entourant l'orifice d'aspiration inférieur (8) sur la face inférieure (4) forme une ventouse inférieure.

2. Support (1) selon la revendication 1, dans lequel l'au moins une pompe à vide (14) est entraînée par un moteur d'entraînement électrique (13) alimenté par une batterie rechargeable (11).

3. Support (1) selon la revendication 2, comprenant un couvercle (21) permettant d'accéder à la batterie rechargeable (11), le couvercle étant disposé de préférence dans la face inférieure (4) et dans lequel le joint d'étanchéité inférieur (6) est de préférence doté d'une ouverture entourant le couvercle (21).

4. Support (1) selon l'une quelconque des revendications 1 à 3, dans lequel un côté aspiration de l'au moins une pompe à vide (14) est raccordé à l'orifice d'aspiration supérieur (7) et à l'orifice d'aspiration inférieur (8) par des branches respectives (16, 17) d'une ligne d'aspiration principale (15).

5. Support (1) selon l'une quelconque des revendications 1 à 4, dans lequel la face supérieure (3) est parallèle à la face inférieure (4), et dans lequel la face supérieure (3) est de préférence opposée à la face inférieure (4).

6. Support (1) selon l'une quelconque des revendications 1 à 5, comprenant un commutateur manuel (12) permettant de commander d'activation et la désactivation de la pompe à vide (14).

7. Procédé de fixation d'un réceptacle (20) destiné à recevoir un produit alimentaire, le procédé comprenant :
la mise à disposition d'un support (1) comportant un logement (2), le logement (2) comportant une face supérieure (3) substantiellement plate configurée pour supporter un côté inférieur de l'article (20), le logement (2) comportant une face inférieure (4) substantiellement plate configurée pour être placée sur un dessus de table, comptoir ou bureau (22), le support (1) comprenant au moins une pompe à vide (14), la face supérieure (3) étant pourvue d'un joint d'étanchéité supérieur (5) entourant un orifice d'aspiration supérieur (7) et la face inférieure (4) étant pourvue d'un joint d'étanchéité inférieur (6) entourant un orifice d'aspiration inférieur (8) disposé dans la face inférieure (4),
et le joint d'étanchéité supérieur (5) entourant l'orifice d'aspiration supérieur (7) sur la face supérieure (3) forme une ventouse supérieure, et le joint d'étanchéité inférieur (6) entourant l'orifice d'aspiration inférieur (8) sur la face inférieure (4) forme une ventouse inférieure,
- la création, par l'action de la pompe à vide (14), d'un vide au moins partiel entre la face supérieure (3) et le côté inférieur de l'article (20), fixant ainsi l'article (20) au support (1) par aspiration, et
- la création, par l'action de la pompe à vide (14), d'un vide au moins partiel entre la face inférieure (4) et le dessus de table, comptoir ou bureau (22), fixant ainsi le support (1) au dessus de table, comptoir ou bureau (22) par aspiration.

8. Procédé selon la revendication 7, comprenant l'activation de la pompe à vide (14) à l'aide d'un commutateur manuel (12) pour fixer l'article (20) au support (1) et pour fixer le support (1) au dessus de table, comptoir ou bureau (22).

9. Procédé selon la revendication 7 ou 8, dans lequel le réceptacle (20) destiné à recevoir un produit alimentaire est une poêle, une poêle à frire, une marmite, une cocotte, une casserole, une boîte de conserve, un pot, un verre, une bouteille, une carafe, un carton, un wok, une tasse, un mug, une planche à découper, une plaque à pâtisserie, une plaque de cuisson, une pierre de cuisson ou un bol.

10. Procédé selon l'une quelconque des revendications 7 à 9, comprenant l'arrêt du vide partiel par désactivation de la pompe à vide (14) et/ou par commutation d'une soupape de purge (19) et ainsi par raccordement de l'orifice d'aspiration supérieur (7) et de l'orifice d'aspiration inférieur (9) à l'atmosphère.
